# EUROPÄISCHE PATENTSCHRIFT

(11) **EP 0 984 123 B1**
(45) Veröffentlichungstag und Bekanntmachung des Hinweises auf die Patenterteilung: **17.11.2004**
(21) Anmeldenummer: 99114818.0
(22) Anmeldetag: 29.07.1999
(51) Int. Cl.: E05B 49/00, B60R 25/00

(54) **Fahrzeugsicherungssystem mit Keyless-Go-Funktionalität**
Vehicle security system with a keyless access module
Systéme de sécurité pour véhicule avec module d'acces sans clé

(30) Priorität: 28.08.1998 DE 19839355
(43) Veröffentlichungstag der Anmeldung: 08.03.2000
(73) Patentinhaber: DaimlerChrysler AG, 70567 Stuttgart (DE)
(72) Erfinder: Daiss, Michael, 70794 Filderstadt (DE); Geber, Michael, 72574 Bad Urach (DE); Lindmayer, Martin, 72172 Sulz (DE); Ohle, Jörn-Marten, 71229 Leonberg (DE); Reinhardt, Matthias, 71364 Winnenden (DE)

(56) Entgegenhaltungen:
- EP-A- 0 426 114
- DE-A- 4 123 654
- US-A- 5 499 022
- US-A- 5 760 701

## Beschreibung

Die Erfindung bezieht sich auf ein Fahrzeugsicherungssystem nach dem Oberbegriff des Anspruchs 1.

Derartige Fahrzeugsicherungssysteme werden häufig als sogenannte schlüssellose oder "Keyless-Go"-Systeme bezeichnet. Bei ihnen erfolgt die Authentikation, d.h. die Berechtigungsprüfung, charakteristischerweise unter Verwendung tragbarer, handhabungsfreier Authentikationselemente, wobei unter dem Begriff "handhabungsfrei" vorliegend die Tatsache zu verstehen ist, daß das betreffende Authentikationselement für die Durchführung des Authentikationsvorgangs über den drahtlosen Kommunikationskanal vom Nutzer nicht gehandhabt, sondern lediglich mitgeführt und in den Wirkbereich dieses Kommunikationskanals gebracht werden muß. Unter dem Begriff "Wirkbereich" ist dabei derjenige Bereich zu verstehen, in welchem sich das Authentikationselement befinden muß, damit ein ausgelöster Zugangsberechtigungsprüfvorgang auch tatsächlich durchgeführt wird. Dieser Wirkbereich ist z.B. durch die wirksame Reichweite fahrzeugseitiger Antennen dieses Kommunikationskanals definiert und wird auch als Fangbereich bezeichnet. Das Auslösen einer jeweiligen Zugangsberechtigungsprüfung erfolgt beim vorliegenden System nicht schon selbsttätig allein beim Eintritt des Authentikationsmittels in den Kommunikationswirkbereich, sondern erst auf Benutzeranforderung hin, wozu ein entsprechendes, benutzeransprechbares Auslöseelement vorgesehen ist, das vorzugsweise fahrzeugseitig so angeordnet ist, daß das Authentikationselement handhabungsfrei bleibt. Herkömmliche derartige Auslöselemente, mit denen Authentikationsvorgänge mindestens zum Entsichern, ggf. auch zum Sichern eines oder mehrerer Fahrzeugschließelemente, wie für die Fahrzeugtüren und einen Heckdeckel, ausgelöst werden können, sind beispielsweise durch Kontakt- oder Schaltelemente in der Nähe eines Türgriffs realisiert, so daß der Authentikationsvorgang automatisch mit der normalen Türgriffbetätigung ausgelöst wird, siehe die Patentschriften DE 43 30 118 C1, DE 44 09 167 C1 und DE 44 14 734 C2. Alternativ ist eine Authentikationsauslösung zur Zugangsberechtigungsprüfung ohne Authentikationselementhandhabung für das Entsichern und/oder Sichern von Fahrzeugschließelementen durch Eingabe entsprechender Sprachbefehle bekannt, siehe die Patentschriften DE 40 27 491 C2 und DE 195 11 386 C1.

Oftmals dient dasselbe Authentikationselement neben der Zugangsberechtigungsprüfung auch zur Fahrberechtigungsprüfung, d.h. zur Ansteuerung einer elektronischen Wegfahrsperre, siehe die genannte Patentschrift DE 195 11 386 C1 sowie die Patentschrift DE 196 05 836 C1.

Neben den vorliegend betrachteten Systemen mit handhabungsfreien, transportablen, nur mitzuführenden Authentikationselementen sind Zugangskontrolleinrichtungen und elektronische Wegfahrsperren mit handhabungsbehafteten Authentikationsmitteln in Gebrauch. Der klassische Typ sind die rein mechanischen Schlüssel-/Schloßsysteme mit mechanischen Türschlössern und/oder einem mechanischen Zündschloß einerseits sowie mechanischen Schlüsseln andererseits. Daneben sind Nahfeldsysteme bekannt, bei denen zwar ein drahtloser Authentikationskommunikationskanal vorgesehen ist, das Authentikationsmittel, z.B. in Form eines Transponders oder einer Chipkarte, jedoch in den Nahfeldbereich einer fahrzeugseitigen Sende- und/oder Empfangeinheit oder funktionell äquivalent umgekehrt die fahrzeugseitige Sende- und/oder Empfangseinheit mit ihrem Wirkbereich in die Nähe des Authentikationselements gebracht werden muß, wobei sich der Wirkbereich dieser Systeme typischerweise über höchstens einige Zentimeter erstreckt. Eine elektronische Wegfahrsperre dieses Typs ist in der Offenlegungsschrift EP 0 767 091 A1 beschrieben. Ein weiterer, weitverbreiteter Typ beinhaltet elektronische Schlüssel als handhabungsbehaftete Authentikationselemente, an denen das Auslöseelement zum Auslösen von zugangsberechtigungsprüfenden und/oder fahrberechtigungsprüfenden Kommunikationsvorgängen angeordnet ist, siehe die Patentschriften DE 195 24 689 C1, DE 195 31 219 C1, DE 196 21 556 C1 und DE 196 42 017 C1.

Für den oder die Authentikationskommunikationskanäle wird häufig ein zugelassenes Frequenzband um 433MHz benutzt, siehe die Patentschrift DE 196 12 452 C1.

In der Patentschrift DE 195 42 441 C2 sind verschiedene, verwendbare fahrzeugseitige Antenneneinheiten von Zugangsberechtigungs- und/oder Fahrberechtigungs-Kommunikationskanälen für Fahrzeugsicherungssysteme der vorliegenden Art mit handhabungsfreien Authentikationselementen in Form von mitführbaren, tragbaren Transpondern offenbart, wobei mögliche Positionierungen der Antennen und deren sich daraus ergebender Wirkbereich angegeben sind. Insbesondere können Antennen an den Türaußenseiten derart angeordnet sein, daß sie zum Außenbereich hin mit maximaler Feldstärke, zum Innenraum hin jedoch noch immer so stark senden können, daß ihr Wirkbereich auch den Fahrzeuginnenraum größtenteils umfaßt. Dabei kann vorgesehen sein, die Antenne, wenn sich der Transponder im Außenraum befindet, mit maximaler Leistung und, wenn sich der Transponder im Innenraum befindet, mit verringerter Leistung zu betreiben. Weitere außenseitige Positionsmöglichkeiten sind in den Stoßfängern, im Fahrzeugboden oder in den Außenspiegeln. Antennen mit Wirkbereichen in einer Kofferraumumgebung können unter der Hutablage, im Kofferraum selbst oder in dessen Nähe angeordnet sein. Antennen zur Kommunikation mit einem Transponder im Innenraum können z.B. in der Türinnenverkleidung, im Fahrzeugdach, unter den Sitzen oder im Fahrzeugboden angeordnet sein.

Der vorliegend betrachtete Keyless-Go-Systemtyp findet in jüngster Zeit erhöhte Beachtung und Anwendung, da er durch den Wegfall von Handhabungsaktionen mit dem Authentikationselement einen höheren Bedienkomfort gegenüber den Systemen mit handhabungsbehafteten Authentikationselementen bietet. Eine Problematik des Keyless-Go-Systems gegenüber Systemen mit handhabungsbehafteten Authentikationsmitteln besteht allerdings darin, daß es nicht mehr automatisch gewährleistet, daß der Benutzer, der einen zugangsberechtigungsprüfenden oder fahrberechtigungsprüfenden Kommunikationsvorgang auslöst, das Authentikationselement tatsächlich bei sich trägt. So könnte z.B., wenn sich der Wirkbereich des Zugangsberechtigungs-Kommunikationskanals auch über weite Teile des Fahrzeuginnenraums erstreckt, ein Dritter von außen am Fahrzeug durch Betätigen eines fahrzeugaußenseitig angeordneten Sicherungs- oder Entsicherungs-Auslöseelementes einen entsprechenden Authentikationsvorgang auslösen, der aufgrund eines im Innenraum bei einem den Insassen befindlichen Authentikationselement auch erfolgreich durchgeführt würde. Zudem besteht die Gefahr, daß der berechtigte Fahrzeugnutzer beim Verlassen des Fahrzeugs versehentlich das Authentikationselement im Innenraum innerhalb des Wirkbereichs des Zugangsberechtigungs-Kommunikationskanals liegen läßt. In diesem Fall würde dann bei Betätigung eines Verriegelungs-Auslöseelementes zwar ein wirksamer Zugangsberechtigungs-Authentikationsvorgang ausgelöst und das Fahrzeug zugangsgesichert, die Sicherung könnte jedoch von jedem beliebigen Dritten durch Betätigen eines entsprechenden Entriegelungs-Auslöseelementes wieder aufgehoben werden, da das noch im Innenraum verbliebene Authentikationselement den Authentikationsvorgang erfolgreich machen würde.

Die EP 0 426 114 A2 und die US 5 499 022 beschreiben jeweils ein Fahrzeugsicherungssystem mit einer Zugangskontrolleinrichtung mit einem oder mehreren, nutzerseitig mitführbaren, handhabungsfreien Authentikationselementen, einem fahrzeugseitigen Zugangssteuerteil einem drahtlosen Zugangsberechtigungs-Kommunikationskanal für zugangsberechtigungsprüfende Kommunikationsvorgänge zwischen dem jeweiligen Authentikationselement und dem Zugangssteuerteil, wobei der Zugangssteuerteil nur bei positivem Zugangsberechtigungsprüfresultat ein sicherndes oder entsicherndes Zugangskontrollsignal für wenigstens ein Fahrzeugschließelement erzeugt, und mit wenigstens einem benutzeransprechbaren Auslöseelement zum Anfordern der Erzeugung eines jeweiligen sichernden oder entsichernden Zugangskontrollsignals, wobei hierdurch ein jeweiliger zugangsberechtigungsprüfender Kommunikationsvorgang ausgelöst wird, der nur dann erfolgreich durchgeführt wird, wenn sich ein berechtigendes Authentikationselement im vorgegebenen Wirkbereich des Zugangsberechtigungs-Kommunikationskanals befindet, wobei das Authentikationselement-Lokalisierungsmittel zur Feststellung vorgesehen sind, ob sich bei Auslösung eines zugangsberechtigungsprüfenden Kommunikationsvorgangs ein berechtigendes Authentikationselement fahrzeugaußenseitig im Wirkbereich des Zugangsberechtigungs-Kommunikationskanals befindet, und der fahrzeugseitige Zugangssteuerteil wenigstens einen Teil der möglichen Zugangskontrollsignale für das wenigstens eine Fahrzeugschließelement in Abhängigkeit davon erzeugt, ob von den Authentikationselement-Lokalisierungsmitteln das Vorhandensein eines berechtigenden Authentikationselementes fahrzeugaussenseitig im Wirkbereich des Zugangsberechtigungs-Kommunikationskanals festgestellt wird.

Der Erfindung liegt daher als technisches Problem die Bereitstellung eines Fahrzeugsicherungssystems der eingangs genannten Art zugrunde, das einen vergleichsweise hohen Bedienkomfort ermöglicht und unbeabsichtigte Authentikationsvorgänge vermeidet.

Die Erfindung löst dieses Problem durch die Bereitstellung eines Fahrzeugsicherungssystems mit den Merkmalen des Anspruchs 1.

Dieses System beinhaltet Authentikationselement-Lokalisierungsmittel, die zur Feststellung dienen, ob sich bei Auslösung eines zugangsberechtigungsprüfenden Kommunikationsvorgangs ein Authentikationselement fahrzeugaußenseitig im Wirkbereich des Zugangsberechtigungs-Kommunikationskanal befindet oder ob dies nicht der Fall ist, beispielsweise weil es sich im Fahrzeuginnenraum befindet, sei es noch im Wirkbereich des Zugangsberechtigungs-Kommunkationskanals oder außerhalb davon. Mindestens eines der sichernden und/oder entsichernden Zugangskontrollsignale, wie die Verriegelungs- bzw. Entriegelungssteuersignale einer Zentralverriegelungsanlage, wird dann für wenigstens ein Fahrzeugschließelement vom Zugangssteuerteil in Abhängigkeit nicht nur vom Ergebnis des zugangsberechtigungsprüfenden Authentikationsvorgangs, sondern auch dem Ergebnis dieser Feststellung durch die Authentikationselement-Lokalisierungsmittel erzeugt. Dies realisiert ein Keyless-Go-System mit der hohen Fehlbedienungssicherheit von Systemen mit handhabungsbehafteten Authentikationselementen, wie Systemen mit elektronischem Schlüssel. So kann insbesondere vorgesehen sein, auf die Auslösung von die Zugangsberechtigung prüfenden Sicherungs- und/oder Entsicherungs-Kommunikationsvorgängen von der Fahrzeugaußenseite her das entsprechende sichernde bzw. entsichernde Zugangskontrollsignal nur dann zu erzeugen, wenn festgestellt wurde, daß sich ein zugangsberechtigendes Authentikationselement fahrzeugaußenseitig im Wirkbereich des betreffenden Kommunikationskanals befindet, und nicht schon aufgrund eines im Fahrzeuginnenraum verbliebenen Authentikationselementes. Erfindungsgemäß ist zum Auslösen von zugangsberechtigungsprüfenden Kommunikationsvorgängen zwecks Erzeugung eines sichernden Zugangskontrollsignals, das zum Verriegeln eines oder mehrerer, gegebenenfalls aller in eine Zentralverriegelungsanlage einbezogener Fahrzeugschließelemente führt, ein Verriegelungs-Auslöseelement in Form einer Taste oder eines Schalters oder kapazitiven Sensors an der Fahrzeugaußenseite angeordnet, vorzugsweise an einer Fahrzeugtüre oder einem Heckdeckel und dabei wiederum bevorzugt im Bereich oder in der Nähe eines Griffteils. Um das oder die Fahrzeugschließelemente in den gesicherten, verriegelten Zustand zu bringen, muß dieses Verriegelungs-Auslöseelement an der Fahrzeugaußenseite betätigt werden. Der Benutzer behält so die Kontrolle, daß und ob der angeforderte Verriegelungsvorgang tatsächlich durchgeführt wird oder ob dies z.B. wegen im Innenraum verbliebenem Authentikationselement nicht der Fall ist. Im Gegensatz dazu hält der Nutzer bei der alternativ in Betracht kommenden Maßnahme, das Fahrzeugschließsystem automatisch zu verriegeln, wenn das normalerweise vom Nutzer mitgeführte Authentikationselement fahrzeugaußenseitig den Wirkbereich des zugehörigen Kommunikationskanals verläßt, keine Kontrolle mehr darüber, ob dieser Verriegelungsvorgang auch tatsächlich durchgeführt wurde. Zusätzlich ist getrennt vom Verriegelungs-Auslöseelement ein Entriegelungs-Auslöseelement vorzugsweise im Bereich oder in der Nähe eines Griffteils einer Fahrzeugtür oder eines Heckdeckels vorgesehen, über das fahrzeugaußenseitig entriegelnde Kommunikationsvorgänge mit Zugangsberechtigungsprüfung angefordert werden können.

Bei einem nach Anspruch 2 weitergebildeten Fahrzeugsicherungssystem beinhalten die Authentikationselement-Lokalisierungsmittel eine spezielle Auslegung des zugangsberechtigungsprüfenden Kommunikationskanals.

Vorteilhafte Ausführungsformen der Erfindung sind in den Zeichnungen dargestellt und werden nachfolgend beschrieben. Hierbei zeigen:
- Fig. 1: ein schematisches Blockdiagramm eines Fahrzeugsicherungssystems mit Zugangskontrolleinrichtung und elektronischer Wegfahrsperre,
- Fig. 2: eine schematische Draufsicht auf das mit dem Sicherungssysstem von Fig. 1 ausgerüstete Fahrzeug zur Veranschaulichung einer ersten Realisierung von Wirkbereichen eines Zugangsberechtigungs-Kommunikationskanals und
- Fig. 3: eine Ansicht entsprechend Fig. 2, jedoch für eine zweite Realisierung von Wirkbereichen des Zugangsberechtigungs-Kommunikationskanals.

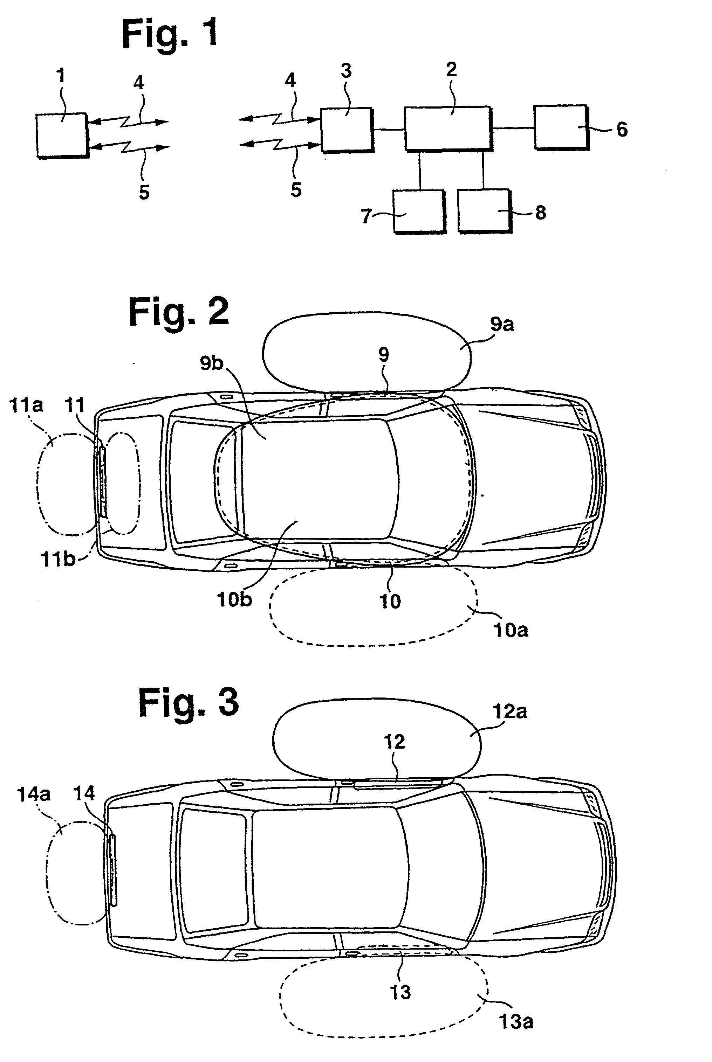

Das in Fig. 1 schematisch dargestellte Fahrzeugsicherungssystem beinhaltet eine Zugangskontrolleinrichtung und eine elektronische Wegfahrsperre und ist als Keyless-Go-System ausgelegt, d.h. für das Fahrzeug sind eine oder mehrere, nutzerseitig mitführbare, handhabungsfreie Authentikationselemente 1 vorgesehen, von denen stellvertretend in Fig. 1 eines gezeigt ist und mit denen sich der Nutzer als berechtigt ausweisen kann, das Fahrzeug zu betreten und zu starten. Als Authentikationselement kann z.B. eine eigenständige Chipkarte dienen. Alternativ kann eine Chipkarte oder ein funktionell äquivalentes Authentikationselement in einen mechanischen oder elektronischen Schlüssel integriert sein, wenn es dem Benutzer ermöglicht werden soll, wahlweise in für ihn gewohnter Weise auch mittels eines solchen Schlüsselsystems das Fahrzeug betreten bzw. abschließen und/oder den Motor starten bzw. abschalten zu können. Andere herkömmliche Arten von Authentikationselementen sind ebenfalls verwendbar.

Fahrzeugseitig beinhaltet das Fahrzeugsicherungssystem eine Steuereinheit 2 gemeinsam für die Zugangskontrolleinrichtung und die elektronische Wegfahrsperre, wobei alternativ auch jeweils getrennte Steuereinheiten vorgesehen sein können. An die Steuereinheit 2 ist eine Antenneneinheit 3 mit mehreren geeignet ausgelegten und am Fahrzeug positionierten Antennen angeschlossen, über welche die Steuereinheit 2 mit dem jeweiligen Authentikationselement 1 zur Durchführung von Authentikationsvorgängen kommuniziert. Diese Kommunikation erfolgt für Kommunikationsvorgänge, welche den Fahrzeugzugang betreffen, über einen drahtlosen Zugangsberechtigungs-Kommunikationskanal 4 und für Kommunikationsvorgänge, welche die elektronische Wegfahrsperre betreffen, über einen drahtlosen Fahrberechtigungs-Kommunikationskanal 5. Bevorzugt sind die beiden Kommunikationskanäle 4, 5 zu einem gemeinsamen Kommunikationskanal vereinigt. In jedem Fall ist das Authentikationselement 1 so ausgelegt, daß es in der Lage ist, mit der Steuereinheit 2 zur Prüfung sowohl der Zugangsberechtigung als auch der Fahrberechtigung zu kommunizieren, wobei es sich im Fall eines gemeinsamen Kommunikationskanals um einen jeweils gleichartigen Authentikationsvorgang handeln kann. Der bzw. die Kommunikationskanäle 4, 5 benutzen vorzugsweise ein Frequenzband um 433MHz, für USA auch um 315MHz, oder alternativ um 125KHz. Das Frequenzband bei 433MHz erlaubt die kostengünstige Realisierung von typischen Reichweiten im Bereich ab ca. 1m bis ca. 30m. Bei Verwendung des Frequenzbandes bei 125KHz läßt sich die Reichweite durch das exponentiell abfallende magnetische Feld vergleichsweise gut einstellen.

Das Authentikationselement 1 kommuniziert vorzugsweise bidirektional über die Kommunikationskanäle 4, 5 mit dem fahrzeugseitigen Systemteil und ist bevorzugt batterielos ausgeführt, wobei es die benötigte Sendeenergie dem von der fahrzeugseitigen Antenneneinheit 3 abgestrahlten Feld entnimmt. In Anwendungen, in denen dieses fahrzeugseitig abgestrahlte Feld für die Energieversorgung des Authentikationselementes 1 bereits in einer Entfernung ab ca. 1m zu schwach ist, sind die Authentikationselemente 1 mit Batterien zur Erzielung einer genügend großen Reichweite bestückt. Bei leerer Batterie kann dann das Authentikationselement ausreichend nahe an das Fahrzeug herangebracht und dadurch fremdenergieversorgt werden.

An die Steuereinheit 2 ist des weiteren eine Auslöseeinheit 6 angeschlossen, die mehrere geeignete benutzeransprechbare Auslöseelemente umfaßt, mit denen der Benutzer eine gewünschte Steuerungsmaßnahme der Zugangskontrolleinrichtung oder der elektronischen Wegfahrsperre anfordern kann. Auf eine solche Anforderung hin löst die Steuereinheit 2 zunächst einen Authentikationsvorgang aus, mit dem die Berechtigung des anfordernden Benutzers geprüft wird. Zur erfolgreichen Durchführung dieses Authentikationsvorgangs ist es erforderlich, daß sich wenigstens ein für dieses Fahrzeug berechtigendes Authentikationselement 1 im Wirkbereich des bzw. der Kommunikationskanäle 4, 5 befindet, d.h. innerhalb des Wirk- bzw. Fangbereichs einer oder mehrerer Antennen der Antenneneinheit 3. Dazu genügt es bei dem Keyless-Go-System, daß der Benutzer das Authentikationselement 1 bei sich trägt. Der Wirkbereich des Zugangsberechtigungs-Kommunikationskanals 4 und derjenige des Fahrberechtigungs-Kommunikationskanals 5 sind hierzu jeweils geeignet gewählt, insbesondere durch passende Gestaltung und Anordnung der diversen Antennen der Antenneneinheit 3.

Von der Steuereinheit 2 werden zum einen eine Schließeinheit 7 mit mehreren Fahrzeugschließelementen, insbesondere je ein Schließelement für die Fahrzeugtüren und einen Heckdeckel, und zum anderen eine Wegfahrsperreinheit 8 angesteuert, die in herkömmlicher Weise geeignete Stellelemente enthält, um einen Motorstart freizugeben oder zu blockieren, wie entsprechende ansteuerbare Schaltelemente zum Ein- und Ausschalten der Zündung und/oder zum Starten des Motors. Je nachdem, ob vom Benutzer über die Auslöseeinheit 6 eine Steuerungsmaßnahme für die Zugangskontrolleinrichtung oder die elektronische Wegfahrsperre angefordert wurde, steuert die Steuereinheit 2 bei erfolgreichem Verlauf des Authentikationsvorgangs die Schließeinheit 7 oder die Wegfahrsperreinheit 8 wunschgemäß an. Die Schließeinheit 7 kann dabei insbesondere von einer herkömmlichen Zentralverriegelungsanlage gebildet sein, die vom sichernden oder entsichernden Zugangskontrollsignal der Steuereinheit 2 in ihren verriegelten bzw. entriegelten Zustand geschaltet wird. Darüber hinaus kann eine separate Ansteuerbarkeit des Schließelementes für den Heckdeckel vorgesehen sein, um diesen separat öffnen zu können, ohne die Fahrzeugtüren zu entriegeln.

Charakteristischerweise sind in der Steuereinheit 2 in Hardware oder Software realisierte Authentikationselement-Lokalisierungsmittel vorgesehen, mit denen festgestellt werden kann, ob sich bei Auslösung eines zugangsberechtigungsprüfenden Kommunikationsvorgangs ein berechtigendes Authentikationselement fahrzeugaußenseitig im Wirkbereich des Zugangsberechtigungs-Kommunikationskanals 4 befindet. Dabei hängt die genaue Realisierung dieser Authentikationselement-Lokalisierungsmittel von der Lage des Wirkbereichs des Zugangsberechtigungs-Kommunikationskanals 4 ab, welcher der Vereinigung der Wirkbereiche aller zugehörigen Einzelantennen entspricht, insbesondere davon, ob sich dieser Wirkbereich auch merklich in den Fahrzeuginnenraum erstreckt oder nicht, wie nachfolgend unter ergänzender Bezugnahme auf die Fig. 2 und 3 erläutert. Es ist dann für den vorliegenden Erfindungsgegenstand weiter charakteristisch, daß die Steuereinheit 2 die vom Benutzer angeforderte, den Fahrzeugzugang betreffende Steuerungsmaßnahme auch in Abhängigkeit davon vornimmt, ob von den Authentikationselement-Lokalisierungsmitteln festgestellt wurde, daß sich ein berechtigendes Authentikationselement, das sich im Wirkbereich des Zugangsberechtigungs-Kommunikationskanal befindet und daher einen erfolgreichen Authentikationsvorgang zur Folge hat, fahrzeugaußenseitig befindet und nicht etwa im Fahrzeuginnenraum.

Fig. 2 zeigt eine Systemauslegung hinsichtlich der Antenneneinheit 3, bei welcher eine erste Antenne 9 im Fahrertürbereich, eine zweite Antenne 10 im Beifahrertürbereich und eine dritte Antenne 11 im Heckdeckelbereich angeordnet sind. Jede dieser drei Antennen 9, 10, 11 besitzt eine typische Doppelkeulen-Abstrahlcharakteristik, wie sie in Fig. 2 mit durchgezogener, gestrichelter bzw. strichpunktierter Linie nicht maßstäblich, sondern lediglich schematisch wiedergegeben sind. Je eine Abstrahlkeule 9a, 10a, 11a ist in den angrenzenden Fahrzeugaußenraum gerichtet und deckt dadurch eine zugehörige fahrzeugaußenseitige Zugangszone ab, in die sich der Fahrzeugnutzer zwangsläufig begibt, wenn er sich über die Türen 9, 10 bzw. den Heckdeckel 11 von außen Zugang zum Fahrzeug verschaffen will. Die jeweils andere Abstrahlkeule 9b, 10b, 11b deckt im wesentlichen den gesamten, praktisch interessierenden Innenraum- bzw. Kofferraumbereich ab. Dabei kann vorgesehen sein, daß die Abstrahlung in den Innenraum schwächer ist als diejenige in den Außenraum, jedoch noch stark genug, um berechtigungsprüfende Kommunikationsvorgänge mit einem dort befindlichen Authentikationselement zu gewährleisten.

Passend zu diesem insoweit herkömmlich gestalteten Antennensystem sind in diesem Fall die Authentikationselement-Lokalisierungsmittel in der Steuereinheit 2 derart realisiert, daß sie bei einem von der Steuereinheit 2 ausgelösten Authentikationsvorgang einzeln prüfen, ob ein entsprechender Kommunikationsvorgang mit einem berechtigenden Authentikationselement über die Fahrertürantenne 9 und/oder die Beifahrertürantenne 10 abläuft, und die Resultate dahingehend auswerten, ob sich das Authentikationselement im Fangbereich einer der beiden fahrzeugaußenseitigen Abstrahlkeulen 9a, 10a oder aber in den Fangbereichen der sich im wesentlichen vollständig überlappenden, innenraumseitigen Abstrahlkeulen 9b, 10b befindet. Die Authentikationselement-Lokalisierungsmittel können daraus entscheiden, ob sich das Authentikationselement, das einen wirksamen Authentikationsvorgang bewirkt hat und daher im Wirkbereich des Zugangsberechtigungs-Kommunikationskanals liegt, fahrzeugaußenseitig oder im Fahrzeuginnenraum befindet. Das heißt, die Authentikationselement-Lokalisierungsmittel schließen darauf, daß sich das berechtigende Authentikationselement fahrzeugaußenseitig in Fahrertürnähe befindet, wenn sie über die Fahrertürantenne 9, jedoch nicht über die Beifahrertürantenne 10 einen wirksamen Authentikationskommunikationsvorgang feststellen, während sie auf das Vorhandensein des Authentikationselementes im fahrzeugaußenseitigen Beifahrertürbereich schließen, wenn sie einen derartigen Kommunikationsvorgang über die Beifahrertürantenne 10, jedoch nicht über die Fahrertürantenne 9 feststellen. Beobachten die Authentikationselement-Lokalisierungsmittel einen entsprechenden Kommunikationsvorgang sowohl über die Fahrertürantenne 9 wie auch über die Beifahrertürantenne 10, so schließen sie daraus, daß sich das berechtigende Authentikationselement im Fahrzeuginnenraum befindet. Wenn von der Steuereinheit 2 das Ausbleiben eines wirksamen Authentikationskommunikationsvorgangs festgestellt wird, schließt diese darauf, daß sich kein berechtigendes Authentikationselement im Wirkbereich der Kommunikationskanäle 4, 5 befindet, und unterläßt die angeforderte Steuerungsmaßnahme. Es versteht sich, daß die diversen Antennen auch anders positioniert und/oder durch weitere Antennen ergänzt sein können, wie dem Fachmann geläufig. Dies gilt auch für die Antennenanordnung von Fig. 3.

Bei dieser modifizierten, in Fig. 3 dargestellten Antennenanordnung sind eine fahrertürseitige Antenne 12, eine beifahrertürseitige Antenne 13 und eine heckdeckelseitige Antenne 14 so ausgelegt und positioniert, daß sie im wesentlichen vollständig in den angrenzenden Fahrzeugaußenraum abstrahlen, wie durch die durchgezogen, gestrichelt bzw. strichpunktiert schematisch angedeuteten Abstrahlkeulen 12a, 13a, 14a repräsentiert. Die Realisierung dieser Antennenanordnung erfordert zwar gegenüber derjenigen von Fig. 2 einen höheren Aufwand, vereinfacht jedoch die Implementierung der Authentikationselement-Lokalisierungsmittel.

Denn letztere brauchen dann lediglich dazu eingerichtet sein, getrennt erfassen zu können, ob ein berechtigender Authentikationsvorgang über die fahrertürseitige Antenne 12 oder die beifahrertürseitige Antenne 13 abläuft. Trifft einer der beiden Fälle zu, kann sofort darauf geschlossen werden, daß sich das berechtigende Authentikationselement in der entsprechenden fahrzeugaußenseitigen Zugangszone und nicht im Fahrzeuginnenraum befindet. Es versteht sich, daß zur fahrberechtigenden Authentikationskommunikation, d.h. zum Sichern und Entsichern der elektronischen Wegfahrsperre, weitere, in Fig. 3 nicht gezeigte Antennen vorgesehen sind, die den Fahrzeuginnenraum abdecken, jedenfalls dessen Authentikationselement-Aufenthaltszone, d.h. den Bereich, in welchem sich ein Authentikationselement im Innenraum in der Praxis befinden kann, wenn es von einem dort befindlichen Fahrzeuginasssen getragen oder von diesem dort abgelegt wird. Im Beispiel von Fig. 2 können solche weiteren Antennen entfallen, da diese innenraumseitige Authentikationselement-Aufenthaltszone bereits durch die innenraumseitigen Abstrahlkeulen 9b, 10b der fahrertürseitigen und der beifahrertürseitigen Antenne 9, 10 abgedeckt wird.

Die Feststellung, ob sich das Authentikationselement in der jeweiligen Situation außerhalb des Fahrzeugs oder im Fahrzeuginnenraum befindet, ermöglicht für das Keyless-Go-System einen hohen Bedienkomfort, wie aus der nachfolgenden Erläuterung typischer Beispielsituationen deutlich wird. Zum Entriegeln, d.h. Entsichern, eines zuvor ordnungsgemäß gesicherten, d.h. verschlossenen Fahrzeugs durch einen außenseitig an das Fahrzeug herantretenden Benutzer betätigt dieser ein zugehöriges Entriegelungs-Auslöseelement der Auslöseeinheit 6. Das Entriegelungs-Auslöseelement kann vorteilhaft von einem kapazitiven Sensor gebildet sein, der an einem jeweiligen Griffteil der Fahrzeugtüren so angeordnet ist, daß er vom Benutzer automatisch betätigt wird, wenn dieser den Türgriff zwecks Öffnen der Fahrzeugtür betätigt. Die Steuereinheit 2 löst daraufhin einen Authentikationsvorgang aus und stellt über die Authentikationselement-Lokalisierungsmittel zusätzlich fest, ob sich ein berechtigendes Authentikationselement außen am Fahrzeug befindet, wie dies der Fall ist, wenn es vom anfordernden Benutzer mitgeführt wird, und nicht etwa im Fahrzeuginnenraum, z.B. weil sich dort bereits ein berechtigter Benutzer aufhält oder ein berechtigendes Authentikationselement von einem Fahrzeuginsassen beim Verlassen des Fahrzeugs im Innenraum liegengelassen wurde.

Zum Verriegeln der im entsicherten Zustand befindlichen Schließeinheit 7 von außen, insbesondere beim Verlassen des Fahrzeugs, ist separat vom Entriegelungs-Auslöseelement ein Verriegelungs-Auslöseelement z.B. in Form je einer Verriegelungstaste in der Nähe des Fahrertürgriffs und/oder des Beifahrertürgriffs und vorzugsweise auch am Heckdeckel vorgesehen. Bei Anordnung am Heckdeckel kann das Verriegelungs-Auslöseelement insbesondere auch als kapazitiver Sensor ausgelegt sein, der an der Heckdeckelklappe angeordnet ist, vorzugsweise unter einer zugehörigen Griffleiste. Die Steuereinheit 2 gibt nur dann einen entsprechenden Verriegelungsbefehl an die Schließeinheit 7, wenn der von ihr ausgelöste Authentikationsvorgang erfolgreich abläuft, sie über die Authentikationselement-Lokalisierungsmittel erkennt, daß ein berechtigendes Authentikationselement im Fahrzeugaußenraum vorliegt und außerdem alle Fahrzeugtüren geschlossen sind und ein Getriebewählhebel in Park- bzw. Leerlaufstellung ist, wobei die beiden letztgenannten Bedingungen in herkömmlicher Weise über entsprechende, nicht gezeigte Informationskanäle von der Steuereinheit 2 erfaßt werden. Vorzugsweise ist darüber hinaus eine Komfortschließfunktion vorgesehen, bei der die Steuereinheit 2 das Schließen eventuell geöffneter Fenster und ggf. eines Schiebedaches veranlaßt, wenn das Verriegelungs-Auslöseelement für eine vorgebbare Zeitdauer betätigt gehalten wird. Gleichzeitig mit dem Verriegeln der Schließeinheit 7 steuert die Steuereinheit 2 die Wegfahrsperreinheit 8 in ihren sichernden Zustand, so daß die elektronische Wegfahrsperre geschärft ist.

Über ein am Heckdeckel zusätzlich vorgesehenes Öffnungs-Auslöseelement kann ein Öffnen des Heckdeckels bei verriegeltem Fahrzeug angefordert werden, ohne daß dabei die Fahrzeugtüren entriegelt werden. Bei Betätigen dieses z.B. als Öffnungstaste realisierten Auslöseelementes veranlaßt die Steuereinheit 2 speziell das Öffnen des Heckdeckels, wenn der von ihr dazu ausgelöste Authentikationsvorgang erfolgreich abläuft und von ihr über die Authentikationselement-Lokalisierungsmittel erkannt wird, daß sich ein berechtigendes Authentikationselement fahrzeugaußenseitig in der Heckdeckelumgebung befindet, wozu die Lokalisierungsmittel entsprechend ausgelegt sind. Im Fall der praktisch vollständig nach außen abstrahlenden Heckantenne 14 von Fig. 3 braucht hierfür nur überwacht werden, ob über diese ein erfolgreicher Authentikationsvorgang abläuft. Beim Antennensystem von Fig. 2 ist zusätzlich zur gezeigten, auch nach innen abstrahlenden Heckantenne 11 eine weitere innenraumseitige Antenne vorzusehen, deren Empfangbereich im wesentlichen vollständig im Innenraum liegt, so daß durch die Authentikationselement-Lokalisationsmittel dann wiederum durch Abfrage, ob über diese und/oder die Heckantenne 11 ein Authentikationsvorgang abläuft, analog zum oben geschilderten Fall von Fahrer- und Beifahrerantenne 9, 10 eindeutig festgestellt werden kann, ob der anfordernde Benutzer im Fahrzeugaußenraum tatsächlich ein berechtigendes Authentikationselement bei sich trägt. Dies verhindert, daß ein Unberechtigter durch bloßes Betätigen des Öffnungs-Auslöseelementes den Heckdeckel öffnen kann, weil sich im Kofferraum ein berechtigendes Authentikationselement befindet. Die Abdeckung des Kofferraumbereichs durch den Fangbereich wenigstens einer Antenne kann bei Bedarf auch dazu genutzt werden, durch die Authentikationselement-Lokalisierungsmittel das dortige Vorhandensein eines gültigen Authentikationselementes zu erkennen und in diesem Fall das Heckdeckel-Schließelement entriegelt zu halten und/oder eine entsprechende Warnmeldung abzugeben.

Bevorzugt ist vorgesehen, das Entsichern der elektronischen Wegfahrsperre durch Benutzeraufforderung auszulösen, wozu ein entsprechendes Auslöseelement an geeigneter Stelle im Fahrzeuginnenraum vorgesehen ist. Beim Betätigen dieses Auslöseelementes führt die Steuereinheit 2 einen Authentikationsvorgang durch, um festzustellen, ob der die Fahrberechtigung anfordernde Fahrzeugnutzer ein berechtigendes Authentikationselement mit sich trägt bzw. im Fahrzeuginnenraum abgelegt hat. Bejahendenfalls entsichert sie dann die Wegfahrsperreinheit 8, d.h. gibt die Zündung und das Starten des Motors frei. Es versteht sich, daß im Beispiel von Fig. 3 weitere, nicht gezeigte Antennen vorgesehen sind, deren Wirkbereiche den Fahrzeuginnenraum, d.h. jedenfalls die erwähnte Authentikationselement-Aufenthaltszone desselben abdecken, so daß über diese Antennen die zur Ansteuerung der elektronischen Wegfahrsperre, insbesondere zu deren Entsicherung, benötigten Authentikationsvorgänge durchgeführt werden können. Diese Antennen benötigen nur eine relativ grobe Abgrenzung ihrer Reichweite zum Fahrzeugaußenraum, insbesondere dann, wenn die Steuereinheit 2 diese Antennen gezielt nur für fahrberechtigungsprüfende Kommunikationsvorgänge aktiviert, die anderen Antennen hingegen nur für die zugangsberechtigungsprüfenden Kommunikationsvorgänge. Anzahl und Auslegung der im Innenraum vorhandenen Antennen bestimmen im wesentlichen lediglich den Grad an Bedienkomfort, indem sie die Authentikationselement-Aufenthaltszone definieren, an denen das Authentikationselement zur Freigabe der Wegfahrsperre abgelegt sein kann.

Wenn sich kein berechtigendes Authentikationselement mehr im Fahrzeug befindet, beispielsweise weil der Beifahrer mit selbigem aussteigt, während der Motor noch läuft, bringt die Steuereinheit 2 die Fahrberechtigung nach Abschalten des Motors zum Erlöschen, d.h. die Fahrberechtigung wird laufend bzw. in vorgebbaren Zeitabständen durch Auslösen entsprechender Authentikationsvorgänge von der Steuereinheit 2 überprüft. Ohne gültiges Authentikationselement kann das Fahrzeug anschließend nicht mehr verriegelt werden, so daß zweckmäßigerweise eine Anzeige dieses Zustands vorgesehen ist, wenn das Fahrzeug fährt.

Auch für die übrigen möglichen Fehlzustände können entsprechende Meldungen für den Fahrzeugnutzer vorgesehen sein, z.B. in Form optischer Anzeigen im Instrumententafelbereich. So kann angezeigt werden, daß kein gültiges Authentikationselement beim angeforderten Ent- oder Verriegeln oder beim angeforderten Starten des Motors erkannt wurde, wenn die Steuereinheit 2 den angeforderten Vorgang nicht ausführt. Wenn sich das Fahrzeug nicht verriegeln läßt, weil sich mindestens ein Authentikationselement im Fahrzeug, jedoch keines im Fahrzeugaußenraum befindet, kann dieser Zustand detektiert werden, so daß angezeigt werden kann, daß sich ein Authentikationselement im Fahrzeug befindet. Wenn sich das Fahrzeug nicht verriegeln läßt, weil eine Fahrzeugtür geöffnet ist oder sich ein Getriebewählhebel nicht in Park- bzw. Leerlaufstellung befindet, können auch diese beiden Situationen angezeigt werden. Eine spezifische, z.B. optisch blinkende Anzeige über das Nichterkennen eines gültigen Authentikationselementes kann zudem auf einen Motorstartversuch hin erfolgen, wenn dieser nach vorherigem Abstellen des Motors und Entfernen des Authentikationselementes z.B. durch den Beifahrer nicht zum Erfolg führt und das Fahrzeug mangels Authentikationselement auch nicht mehr verriegelt werden kann. Eine z.B. akustische Warnmeldung kann vorgesehen sein, solange die Fahrertür offen ist, sich der Getriebewählhebel eines Automatgetriebes jedoch nicht in Parkstellung befindet, während die für den Fahrzeugbetrieb maßgeblichen, elektrischen standardisierten Klemmen, insbesondere diejenigen für Zündung, Anlasser und Bordnetzversorgung, abgeschaltet sind. Des weiteren kann vorteilhaft eine Anzeige darüber vorgesehen sein, daß die Betriebsspannung einer im Authentikationselement vorhandenen Batterie einen vorgebbaren Wert unterschreitet, was vom System daran erkannt werden kann, daß das Authentikationselement nur noch relativ schwache Signale während eines Authentikationsvorgangs abgibt.

Die vorstehende Beschreibung gezeigter und alternativer Ausführungsformen macht deutlich, daß das erfindungsgemäße Fahrzeugsicherungssystem ein Keyless-Go-System mit hohem Bedienkomfort und hoher Sicherheit gegenüber Auslösungen unbeabsichtigter Aktionen realisiert.

## Patentansprüche

1. Fahrzeugsicherungssystem mit einer Zugangskontrolleinrichtung mit einem oder mehreren, nutzerseitig mitführbaren, handhabungsfreien Authentikationselementen (1), einem fahrzeugseitigen Zugangssteuerteil (2, 7,) einem drahtlosen Zugangsberechtigungs-Kommunikationskanal (4) für zugangsberechtigungsprüfende Kommunikationsvorgänge zwischen dem jeweiligen Authentikationselement und dem Zugangssteuerteil, wobei der Zugangssteuerteil nur bei positivem Zugangsberechtigungsprüfresultat ein sicherndes oder entsicherndes Zugangskontrollsignal für wenigstens ein Fahrzeugschließelement (7) erzeugt, und mit wenigstens einem benutzeransprechbaren Auslöseelement (6) zum Anfordern der Erzeugung eines jeweiligen sichernden oder entsichernden Zugangskontrollsignals, wobei hierdurch ein jeweiliger zugangsberechtigungsprüfender Kommunikationsvorgang ausgelöst wird, der nur dann erfolgreich durchgeführt wird, wenn sich ein berechtigendes Authentikationselement im vorgegebenen Wirkbereich des Zugangsberechtigungs-Kommunikationskanals befindet, wobei Authentikationselement-Lokalisierungsmittel (2, 9, 10, 11) zur Feststellung vorgesehen sind, ob sich bei Auslösung eines zugangsberechtigungsprüfenden Kommunikationsvorgangs ein berechtigendes Authentikationselement (1) fahrzeugaußenseitig im Wirkbereich des Zugangsberechtigungs-Kommunikationskanals (4) befindet , und der fahrzeugseitige Zugangssteuerteil (2, 7) wenigstens einen Teil der möglichen Zugangskontrollsignale für das wenigstens eine Fahrzeugschließelement (7) in Abhängigkeit davon erzeugt, ob von den Authentikationselement-Lokalisierungsmitteln das Vorhandensein eines berechtigenden Authentikationselementes fahrzeugaußenseitig im Wirkbereich des Zugangsberechtigungs-Kommunikationskanals festgestellt wird **dadurch gekennzeichnet,**
**dass** das benutzeransprechbaren Auslöseelement (6) zur Anforderung der Erzeugung eines sichernden Zugangskontrollsignals ein als Taste, Schalter oder kapazitiver Sensor an der Außenseite einer oder mehrerer Fahrzeugtüren und/oder eines Heckdeckels angeordnetes Verriegelungs-Betätigungselement zur Anforderung der Erzeugung eines entsichernden Zugangskontrollsignals und ein vom jeweiligen Verriegelungs-Betätigungselement getrennt angeordnetes an der Außenseite einer oder mehrerer Fahrzeugtüren und/oder eines Heckdeckels angeordnetes Entriegelungs-Auslöseelement umfässt.

2. Fahrzeugsicherungssystem nach Anspruch 1,
weiter **dadurch gekennzeichnet,**
**dass** der Zugangsberechtigungs-Kommunikationskanal (4) so ausgelegt ist, dass sein Wirkbereich (12a, 13a, 14a) eine fährzeügaußenseitige Zugangszone abdeckt und sich fahrzeuginnenseitig höchstens außerhalb.einer vorgegebenen Authentikationselement-Aufenthaltszone erstreckt.

3. Fahrzeugsicherungssystem nach Anspruch 1 oder 2,
weiter **dadurch gekennzeichnet,**
**dass** zusätzlich eine elektronische Wegfahrsperre vorgesehen ist, der dieselben handhabungsfreien Authentikationselemente wie für die Zugangskontrolleinrichtung zugeordnet sind und die einen fahrzeugseitigen Wegfahrsperrensteuerteil (2, 8), einen drahtlosen Fahrberechtigungs-Kommunikationskanal (5) für fahrberechtigungsprüfende Kommunikationsvorgänge zwischen dem jeweiligen Authentikationselement und dem Wegfahrsperrensteuerteil, wobei der Wegfahrsperrensteuerteil nur bei positivem Zugangsberechtigungsprüfresultat ein sicherndes oder entsicherndes Wegfahrsperrensignal zur Freigabe oder Sperrung einer Zündung und/oder eines Motorstartvorgangs erzeugt, und wenigstens ein benutzeransprechbares Auslöseelement (6) zum Anfordern der Erzeugung eines jeweiligen Wegfahrsperrensteuersignals umfasst, wobei der fahrzeugseitige Wegfahrsperrensteuerteil auf eine solche Anforderung hin einen fahrberechtigungsprüfenden Kommunikationsvorgang auslöst, der nur dann erfolgreich durchgeführt wird, wenn sich das jeweilige Authentikationselement in einem eine vorgegebene Authentikationselement-Aufenthaltszone innerhalb des Fahrzeuginnenraums abdeckenden Wirkbereich des Fahrberechtigungs-Kommunikationskanals befindet.

## Claims

1. Vehicle security system with an access control device with one or more authentication elements (1) not requiring handling to be carried by the driver, with an access control part (2, 7) on the vehicle, with a wireless access authorisation communication channel (4) for access authorisation-checking communication processes between each authentication element and the access control part, whereby the access control part generates a securing or releasing access control signal for at least one vehicle locking element (7) only following a positive result of an access authorisation check, and with at least one user-responsive triggering element (6) for requesting the generation of a securing or releasing access control signal, whereby an access authorisation-checking communication process is initiated which is only successfully completed if an authorising authentication element is in the predetermined effective zone of the access authorisation communication channel, whereby authentication element locating means (2, 9, 10, 11) are provided to determine whether an authorising authentication element (1) is outside the vehicle in the effective zone of the access authorisation communication channel (4) when an access authorisation-checking communication process is triggered, and whereby the access control part (2, 7) on the vehicle generates at least part of the possible access control signals for the at least one vehicle locking element (7) in dependence on whether the authentication element locating means detect the existence of an authorising authentication element outside the vehicle in the effective zone of the access authorisation communication channel,
**characterised in that**
the user-responsive triggering element (6) for requesting the generation of a securing access control signal includes a locking actuating element in the form of a button, switch or capacitive sensor located on the outside of one or more vehicle doors and/or a tailgate for requesting the generation of a releasing access control signal and an unlocking triggering element separate from the locking actuating element located on the outside of one or more vehicle doors and/or a tailgate.

2. Vehicle security system according to claim 1,
further **characterised in that**
the access authorisation communication channel (4) is so designed that its effective zone (12a, 13a, 14a) covers an access zone on the outside of the vehicle and only extends outside a predetermined authentication element location zone inside the vehicle.

3. Vehicle security system according to claim 1 or 2,
further **characterised in that**
in addition an electronic immobiliser is provided, which is assigned the same authentication elements not requiring handling as the access control device, and
which comprises an immobiliser control part (2, 8) on the vehicle, a wireless driving authorisation communication channel (5) for driving authorisation-checking communication processes between each authentication element and the immobiliser control part, whereby the immobiliser control part generates a securing or releasing immobiliser signal for enabling or disabling an ignition and/or an engine starting process only following a positive result of an access authorisation check, and at least one user-responsive triggering element (6) for requesting the generation of an immobiliser control signal, whereby the immobiliser control part on the vehicle initiates a driving authorisation-checking communication process following such a request, which is only successfully completed if the relevant authentication element is in an effective zone of the driving authorisation communication channel which covers a predetermined authentication element location zone within the interior of the vehicle.

## Revendications

1. Système de sécurité pour véhicule avec un dispositif de contrôle d'accès comprenant un ou plusieurs élément(s) d'authentification (1) ne nécessitant pas de manipulation, que l'utilisateur peut garder sur lui, un élément de commande d'accès (2, 7) côté véhicule, un canal de communication de droit d'accès sans fil (4) pour les processus de communication examinant le droit d'accès entre l'élément d'authentification respectif et l'élément de commande d'accès, l'élément de commande d'accès ne produisant un signal de contrôle d'accès de blocage ou de déblocage pour au moins un élément de fermeture du véhicule (7) que lorsque le résultat d'examen de droit d'accès est positif, et comprenant au moins un élément de déclenchement (6) pouvant être déclenché par l'utilisateur pour demander la production d'un signal de contrôle d'accès de blocage ou de déblocage respectif, un processus de communication examinant le droit d'accès respectif étant déclenché dans ce cas, lequel processus n'est réalisé avec succès que lorsqu'un élément d'authentification donnant l'autorisation se situe dans la zone de travail prédéterminée du canal de communication de droit d'accès, des moyens de localisation de l'élément d'authentification (2, 9, 10, 11) étant prévus pour déterminer si un élément d'authentification (1) donnant l'autorisation, dans le cas du déclenchement d'un processus de communication examinant le droit d'accès, se situe côté extérieur du véhicule dans la zone de travail du canal de communication de droit d'accès (4), et l'élément de commande d'accès (2, 7) côté véhicule produit au moins une partie des signaux de contrôle d'accès possibles pour l'un des éléments de fermeture du véhicule (7) en fonction du fait que la présence d'un élément d'authentification donnant l'autorisation est déterminée côté extérieur du véhicule dans la zone de travail du canal de communication de droit d'accès par les moyens de localisation de l'élément d'authentification, **caractérisé en ce que**
l'élément de déclenchement (6) pouvant être déclenché par un utilisateur comprend, pour demander la production d'un signal de contrôle d'accès de blocage, un élément d'actionnement de verrouillage disposé comme une touche, un commutateur ou un capteur capacitif sur le côté extérieur d'une ou de plusieurs porte(s) du véhicule et/ou d'un couvercle arrière, pour demander la production d'un signal de contrôle d'accès de déblocage et un élément de déclenchement de déverrouillage disposé en étant séparé de l'élément d'actionnement de verrouillage respectif et disposé sur le côté extérieur d'une ou de plusieurs porte(s) du véhicule et/ou d'un couvercle arrière.

2. Système de sécurité pour véhicule selon la revendication 1,
**caractérisé en outre en ce que**
le canal de communication de droit d'accès (4) est dimensionné de telle sorte que sa zone de travail (12a, 13a, 14a) recouvre une zone d'accès côté extérieur du véhicule et s'étende côté intérieur du véhicule au maximum à l'extérieur d'une zone prédéterminée occupée par l'élément d'authentification.

3. Système de sécurité pour véhicule selon la revendication 1 ou 2,
**caractérisé en outre en ce**
**qu'**il est prévu en plus de cela un système antidémarrage électronique auquel sont associés les mêmes éléments d'authentification ne nécessitant pas de manipulation que pour le dispositif de contrôle d'accès et qui comprend un élément de commande de système antidémarrage côté véhicule (2, 8), un canal de communication de droit de conduite sans fil (5) pour les processus de communication examinant le droit de conduite entre l'élément d'authentification respectif et l'élément de commande du système antidémarrage, l'élément de commande du système antidémarrage ne produisant un signal de système antidémarrage de blocage ou de déblocage destiné à libérer ou à verrouiller un allumage et/ou un procédé de démarrage du moteur que lorsque le résultat de l'examen du droit d'entrée est positif, et au moins un élément de déclenchement (6) pouvant être déclenché par un utilisateur pour demander la production d'un signal de commande de système antidémarrage respectif, l'élément de commande de système antidémarrage côté véhicule, par suite d'une telle demande, déclenche un processus de communication examinant le droit de conduite, lequel processus n'est réalisé avec succès que lorsque l'élément d'authentification respectif se situe dans une zone de travail du canal de communication de droit de conduite recouvrant une zone prédéterminée occupée par l'élément d'authentification à l'intérieur de l'habitacle du véhicule.
